# EUROPÄISCHE PATENTSCHRIFT

(11) **EP 0 788 733 B1**
(45) Veröffentlichungstag und Bekanntmachung des Hinweises auf die Patenterteilung: **27.10.1999**
(21) Anmeldenummer: 96119944.5
(22) Anmeldetag: 12.12.1996
(51) Int. Cl.: A01G 5/04

(54) **Kernkörper für Frischblumengestecke**
Core body for fresh flower mountings
Corps de noyau pour supports de fleurs fraîches

(30) Priorität: 07.02.1996 DE 19604355
(43) Veröffentlichungstag der Anmeldung: 13.08.1997
(73) Patentinhaber: Schwarzenberg, Hans Josef, 33175 Bad Lippspringe (DE)
(72) Erfinder: Schwarzenberg, Hans Josef, 33175 Bad Lippspringe (DE)
(74) Vertreter: Stracke, Alexander, Dipl.-Ing.

(56) Entgegenhaltungen:
- DE-U- 9 205 696
- DE-U- 29 504 808
- US-A- 2 150 550

## Beschreibung

Die vorliegende Erfindung betrifft einen Kernkörper für Frischblumengestecke in Form eines quaderförmigen Kissens, bestehend aus einer aus kompostierbarem Material, z. B. aus Hartfasern, Holz oder dergleichen gefertigten Grundplatte sowie aus einem damit verbundenen Aufnahmekörper aus einem kompostierbaren Frischblumensteckschaum, wobei zumindest der Aufnahmekörper vollständig von einem Stützdrahtgeflecht umhüllt ist (siehe DE 29504808 U).

Der vorliegenden Erfindung liegt die Aufgabe zugrunde, einen Kernkörper der gattungsgemäßen Art so zu gestalten, daß die Verbindung zwischen der Grundplatte und dem Aufnahmekörper auf einfachste Art und Weise verwirklicht ist.

Diese Aufgabe wird erfindungsgenmäß dadurch gelöst, daß die Grundplatte im Bereich ihrer dem Aufnahmekörper abgewandten Unterseite von ihren Ecken ausgehend mit diagonal verlaufenden Nuten versehen ist, daß das Stützdrahtgeflecht in seinen Eckbereichen mit umgebogenen, in den Nuten der Grundplatte liegenden und mit der Grundplatte verbundenen Haltedrähten versehen ist, wobei die Tiefe der Nuten größer ist als die Dicke der Haltedrähte.

Ein derart gestalteter Kernkörper ist einfach und preiswert herstellbar, da die Befestigung oder die Verbindung zwischen der Grundplatte einerseits und dem Aufnahmekörper andererseits unmittelbar über das Stützdrahtgeflecht bzw. über dessen Haltedrähte erfolgt. Die Haltedrähte des Stützdrahtgeflechtes werden nach dem Überstülpen des Stützdrahtgeflechtes über den Aufnahmekörper im Bereich der Nuten der Grundplatte umgebogen und auf den jeweiligen Nutgrund aufgedrückt. In dieser Position werden dann die Haltedrähte beispielsweise durch Klammern mit der Grundplatte verbunden, so daß gleichzeitig auch eine Verbindung zwischen der Grundplatte und dem Aufnahmekörper erreicht ist. Da die Haltedrähte in den dafür vorgesehenen Nuten der Grundplatte liegen und die Tiefe der Nuten größer ist als die Dicke der Haltedrähte, stehen keinerlei störende Teile über die Unterseite der Grundplatte hinaus vor. Dies bringt einerseits den Vorteil mit sich, daß keinerlei Verletzungsgefahren bei der Handhabung eines erfindungsgemäßen Kernkörpers auftreten können und andererseits kann der Kernkörper mit der Grundplatte jederzeit auf jeden beliebigen Untergrund abgestellt werden, ohne daß dabei Beschädigungsgefahren für den Ablagebereich entstehen.

Bei vergleichsweise kleiner Grundfläche kann es sinnvoll sein, die Nuten von Ecke zu Ecke durchlaufend auszubilden.

Bei größeren Grundflächen hingegen kann es wirtschaftlicher sein, die Nuten jeweils nur so lang auszuführen, daß die Haltedrähte störungsfrei in die jeweilig vorgesehene Nut eingebracht werden können.

Die von einer gemeinsamen Stirnseite ausgehenden Nuten können etwa in der Mitte der Grundplatte ineinander übergehend ausgebildet sein. Dabei können dann die Haltedrähte mit ihren Enden einander jeweils paarweise überlappen und im Überlappungsbereich gemeinsam an der Grundplatte befestigt sein.

Weitere Merkmale der Erfindung sind Gegenstand weiterer Unteransprüche.

Ausführungsbeispiele der Erfindung sind in den beigefügten Zeichnungen dargestellt, die im folgenden näher beschrieben werden. Es zeigen:
- Figur 1: eine perspektivische Darstellung eines erfindungsgemäßen Kernkörpers in einem Vormontage-Zustand,
- Figur 2: Eine Unteransicht eines erfindungsgemäßen Kernkörpers nach einem weiteren Ausführungsbeispiel der Erfindung,
- Figur 3: eine Unteransicht einer Grundplatte eines erfindungsgemäßen Kernkörpers nach einem weiteren Ausführungsbeispiel der Erfindung.

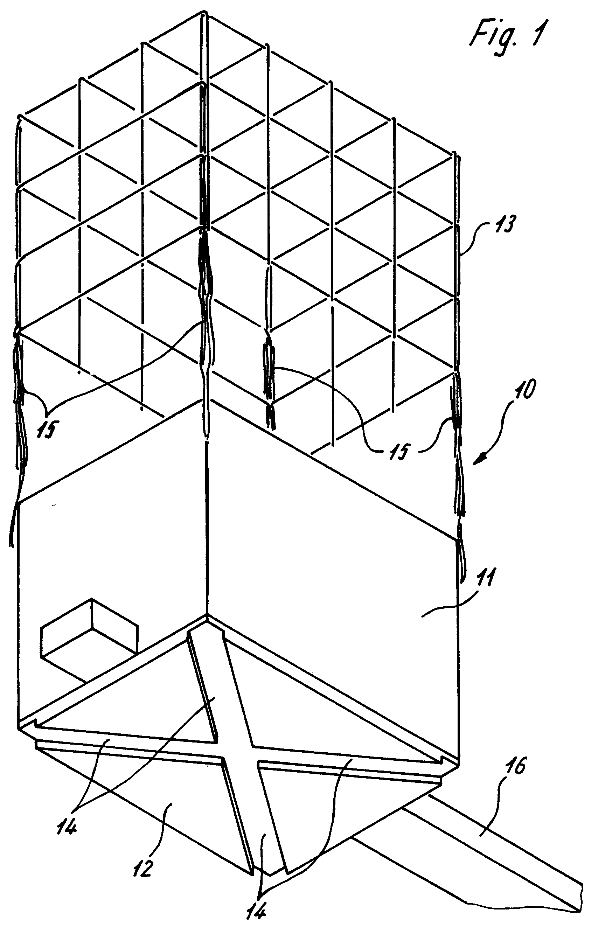

Der in Figur 1 dargestellte, insgesamt mit dem Bezugszeichen 10 bezeichnete Kernkörper für Frischblumengestecke besteht im wesentlichen aus einem quaderförmigen Aufnahmekörper 11, einer Grundplatte 12 sowie einem Stützdrahtgeflecht 13.

Der aus diesen Komponenten bestehende Kernkörper weist dann insgesamt die Form eines quaderförmigen Kissens auf.

Der Aufnahmekörper 11 ist aus einem kompostierbaren Frischblumensteckschaum hergestellt. Die Grundplatte 12 besteht ebenfalls aus einem kompostierbaren Material, z. B. aus Hartfasern oder aus Holz.

Das aus relativ dünnem Draht hergestellte Stützdrahtgeflecht 13 ist leicht verrottbar, so daß der erfindungsgemäße Kernkörper insgesamt äußerst umweltfreundlich ist.

Die Grundplatte 12 ist im Bereich ihrer dem Aufnahmekörper 11 abgewandten Unterseite mit Nuten 14 versehen, welche jeweils von den Ecken der Grundplatte 12 ausgehen und sich diagonal in Richtung der Grundplattenmitte erstrecken. Im Ausführungsbeispiel gemäß Figur 1 sind die Nuten 14 von Ecke zu Ecke durchlaufend ausgebildet.

Das Stützdrahtgeflecht 13 ist in seinen Eckbereichen mit vorstehenden Haltedrähten 15 versehen, welche nach dem Überstülpen des Stützdrahtgeflechtes 13 über den Aufnahmekörper 11 umgebogen werden und in die Nuten 14 der Grundplatte eingedrückt werden. Diese Haltedrähte 15 werden dann mit Klammern, Nägeln oder dergleichen mit der Grundplatte 12 verbunden. Durch diese Verbindungsart wird gleichzeitig die Grundplatte 12 mit dem Aufnahmekörper 11 zu einem festen Verbund zusammengefaßt, so daß weitere Verbindungsmittel zwischen Grundplatte 12 und Aufnahmekörper 11 nicht benötigt werden.

Die Tiefe der Nuten 14 ist so gewählt, daß diese größer ist als die Dicke der Haltedrähte 15, so daß die in den Nuten 14 einliegenden Haltedrähte 15 oder die benötigten Befestigungsmittel nicht über die Unterseite der Grundplatte 12 hinaus vorstehen. Eine Verletzungsgefahr wird somit ebenso vermieden wie eine Beschädigungsgefahr einer Unterlage, auf der ein derartig gefertigter Kernkörper 10 aufgestellt wird.

Wie in Figur 1 angedeutet, kann die Grundplatte 12 in ihrem mittleren Bereich mit einer Griffleiste 16 ausgestattet sein, wobei sich diese Griffleiste 16 auf der dem Aufnahmekörper 11 zugewandten Innenseite der Grundplatte 12 befindet und mit dieser Grundplatte 12 verbunden ist. Die Griffleiste 16 ist ebenfalls aus einem kompostierbaren Material gefertigt, hier bietet sich vorzugsweise Holz an.

Ein mit einer Griffleiste 16 ausgestatteter Kernkörper 10 wird im allgemeinen als Bukett-Halter bezeichnet. Wird auf die Anbringung einer Griffleiste 16 verzichtet, spricht man in der einschlägigen Branche von einer Sargauflage.

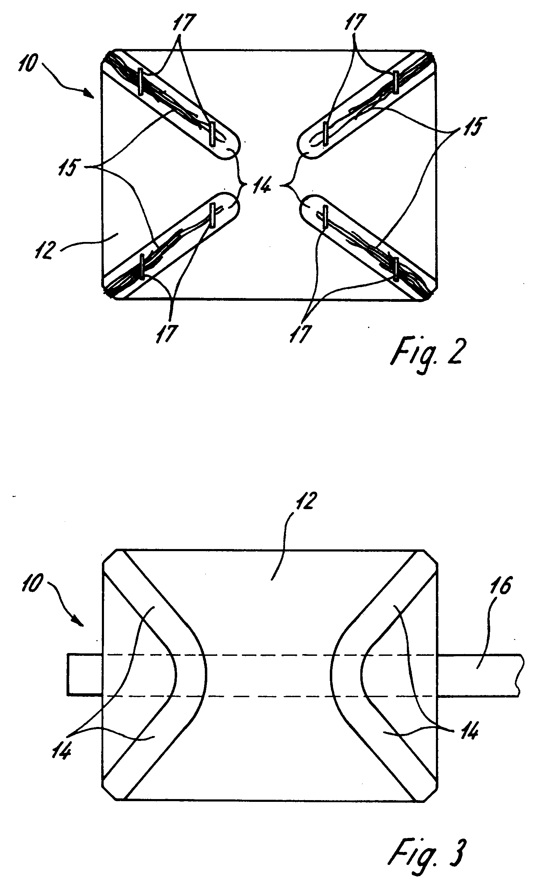

Figur 2 zeigt einen entsprechenden Kernkörper 10 in Form einer Sargauflage von der Unterseite. Es ist deutlich erkennbar, daß die umgebogenen Haltedrähte 15 des Stützdrahtgeflechtes in den Nuten 14 liegen und beispielsweise mittels entsprechender Klammern 17 mit der Grundplatte 12 verbunden sind.

In Figur 2 ist auch gezeigt, daß die Nuten 14 lediglich die Länge der Haltedrähte 15 aufweisen können, was insbesondere bei Kernkörpern 10 mit einer relativ großen Grundfläche empfehlenswert ist.

Figur 3 zeigt die Unterseite einer Grundplatte 12 eines Kernkörpers 10 nach einem weiteren Ausführungsbeispiel der Erfindung. Hier ist die Grundplatte 12 mit Nuten 14 versehen, die etwa im mittleren Bereich der Grundplatte 12 ineinander übergehen. Hierdruch wird die Möglichkeit geschaffen, die Enden der in Figur 3 nicht gezeigten Haltedrähte jeweils paarweise miteinander überlappen zu lassen und im jeweiligen Überlappungsbereich gemeinsam an der Grundplatte 12 zu befestigen. Ist dann noch eine Griffleiste 16 vorgesehen, kann das jeweilige Befestigungsmittel bis in die zusätzliche Griffleiste 16 eingetrieben werden, so daß eine extrem sichere Befestigung erzielt wird, ohne daß die Gefahr besteht, daß die Grundplatte 12 im geschwächten Nutbereich aufplatzt.

## Patentansprüche

1. Kernkörper für Frischblumengestecke in Form eines quaderförmigen Kissens, bestehend aus einer aus kompostierbarem Material, z. B. aus Hartfasern, Holz oder dergleichen gefertigten Grundplatte sowie aus einem damit verbundenen Aufnahmekörper aus einem kompostierbaren Frischblumensteckschaum, wobei zumindest der Aufnahmekörper vollständig von einem Stützdrahtgeflecht umhüllt ist, **dadurch gekennzeichnet, daß** die Grundplatte (12) im Bereich ihrer dem Aufnahmekörper (11) abgewandten Unterseite von ihren Ecken ausgehend mit diagonal verlaufenden Nuten (14) versehen ist, daß das Stützdrahtgeflecht (13) in seinen Eckbereichen mit umgebogenen, in den Nuten (14) der Grundplatte (12) liegenden und mit der Grundplatte (12) verbundenen Haltedrähten (15) versehen ist, wobei die Tiefe der Nuten (14) größer ist als die Dicke der Haltedrähte (15).

2. Kernkörper nach Anspruch 1, **dadurch gekennzeichnet, daß** die Nuten (14) von Ecke zu Ecke durchlaufend ausgebildet sind.

3. Kernkörper nach Anspruch 1, **dadurch gekennzeichnet, daß** die Nuten (14) jeweils etwa der Länge der Haltedrähte (15) entsprechend ausgeführt sind.

4. Kernkörper nach Anspruch 1, **dadurch gekennzeichnet, daß** die von einer gemeinsamen Stirnseite ausgehenden Nuten (14) etwa in der Mitte der Grundplatte (12) ineinander übergehen.

5. Kernkörper nach einem der vorhergehenden Ansprüche, **dadurch gekennzeichnet, daß** die Haltedrähte (15) jeweils einzeln mit der Grundplatte (12) verbunden sind.

6. Kernkörper nach einem der Ansprüche 1 - 4, **dadurch gekennzeichnet, daß** die Enden der Haltedrähte (15) einander jeweils paarweise überlappen und im Überlappungsbereich gemeinsam an der Grundplatte (12) befestigt sind.

7. Kernkörper nach einem der vorhergehenden Ansprüche, **dadurch gekennzeichnet, daß** etwa in der Mitte der Grundplatte (12) eine zumindest über eine Stirnseite der Grundplatte (12) hinaus vorstehende Griffleiste (16) vorgesehen ist, die auf der dem Aufnahmekörper (11) zugewandten Innenseite der Grundplatte liegt.

8. Kernkörper nach Anspruch 7, **dadurch gekennzeichnet, daß** die Befestigungsmittel, vorzugsweise Klammern (17), bis in die Griffleiste (16) eingetrieben sind.

## Claims

1. A core body for fresh-flower arrangements in the form of a cuboidal cushion comprising a base plate which is made from compostable material, for example hard fibres, wood or the like, and a receiving body which is connected to the base plate and which comprises a compostable fresh flower insertion foam, wherein at least the receiving body is completely enclosed by a support wire mesh, characterised in that in the region of its underside remote from the receiving body (11) the base plate (12), starting from the corners thereof, is provided with diagonally extending grooves (14), that the support wire mesh (13) is provided In its corner regions with bent-over holding, wires (15) which are disposed in the grooves (14) of the base plate (12) and connected to the base plate (12), wherein the depth of the grooves (14) is greater than the thickness of the holding wires (15).

2. A core body according to claim 1 characterised in that the grooves (14) are continuous from corner to corner.

3. A core body according to claim 1 characterised in that the grooves (14) each approximately correspond to the length of the holding wires (15).

4. A core body according to claim 1 characterised in that the grooves (14) which start from a common end merge into each other approximately at the centre of the base plate (12).

5. A core body according to one of the preceding claims characterised in that the holding wires (15) are each individually connected to the base plate (12).

6. A core body according to one of claims 1 to 4 characterised in that the ends of the holding wires (15) respectively mutually overlap in pairs and in the overlapped region are jointly secured to the base plate (12).

7. A core body according to one of the preceding claims characterised in that provided approximately in the centre of the base plate (12) is a gripping bar (16) which projects at least beyond an end of the base plate (12) and which is disposed on the inward side of the base plate, that is towards the receiving body (11).

8. A core body according to claim 7 characterised in that the fixing means, preferably clips (17) are driven into the gripping bar (16).

## Revendications

1. Corps central destiné à des pique-fleurs pour fleurs fraîches en forme de coussin parallélépipédique, comprenant un socle réalisé dans un matériau biodégradable, tel que les fibres de sisal, du bois ou similaire, ainsi qu'un corps de positionnement assemblé avec ledit socle et réalisé dans une mousse biodégradable pour compositions florales, au moins le corps de positionnement étant entièrement enveloppé par un treillis de support en fil, caractérisé en ce que le socle (12), dans la partie de sa face inférieure opposée au corps de positionnement (11), est muni de rainures (14) qui s'étendent en diagonale à partir des angles, en ce que les zones d'angle du treillis de support en fil (13) sont munies de fils de retenue (15) coudés, posés dans les rainures (14) du socle (12) et reliés au socle (12), la profondeur des rainures (14) étant supérieure à l'épaisseur des fils de retenue (15).

2. Corps central selon la revendication 1, caractérisé en ce que les rainures (14) sont réalisées en continu d'un angle vers l'autre.

3. Corps central selon la revendication 1, caractérisé en ce que les rainures (14) sont réalisées chacune en fonction de la longueur des fils de retenue (15).

4. Corps central selon la revendication 1, caractérisé en ce que les rainures (14) qui partent d'un même côté frontal se croisent pratiquement au centre du socle (12).

5. Corps central selon l'une quelconque des revendications précédentes, caractérisé en ce que les fils de retenue (15) sont reliés chacun individuellement avec le socle (12).

6. Corps central selon l'une quelconque des revendications 1 à 4, caractérisé en ce que les extrémités des fils de retenue (15) se chevauchent par paire et sont fixées ensemble sur le socle (12) dans la zone de chevauchement.

7. Corps central selon l'une quelconque des revendications précédentes, caractérisé en ce qu'il est prévu pratiquement au centre du socle (12) une baguette formant un manche (16) qui s'avance en saillie au-delà d'un côté frontal du socle (12) et qui est posée sur la face intérieure du socle, orientée vers le corps de positionnement (11).

8. Corps central selon la revendication 7, caractérisé en ce que les moyens de fixation, de préférence des agrafes (17), sont enfoncés jusque dans la baguette formant un manche (16).
